# EUROPÄISCHE PATENTANMELDUNG

(11) **EP 2 166 343 A1**
(43) Veröffentlichungstag der Anmeldung: **24.03.2010**
(21) Anmeldenummer: 08022413.2
(22) Anmeldetag: 23.12.2008
(51) Int. Cl.: G01N 21/71, C23C 4/12, G01J 5/60

(54) **Verfahren und Vorrichtung zur Bestimmung des Einschmelzgrads einer thermisch gespritzen Oberfläche**

(30) Priorität: 22.09.2008 DE 102008048262
(71) Anmelder: Linde AG, 80331 München (DE)
(72) Erfinder: Zierhut, Jochen, 81739 München (DE); Heinrich, Peter, 82110 Germering (DE); Krömmer, Werner, 84034 Landshut (DE)
(74) Vertreter: Schüssler, Andrea

(57) **Zusammenfassung**

Bei einem Verfahren zur Bestimmung eines Einschmelzgrads einer thermisch gespritzten Oberfläche wird zumindest ein Teilbereich der Oberfläche mit einer Kamera beobachtet, aus den von der Kamera aufgenommenen Bilddaten werden Helligkeit und/oder Farbe der Oberfläche bestimmt und aus einer Veränderung der Helligkeit und/oder der Farbe der Oberfläche wird der Einschmelzgrad ermittelt. Die Erfindung betrifft auch eine Vorrichtung zur Durchführung des Verfahrens sowie ein Verfahren und eine Vorrichtung zum automatischen Einschmelzen einer thermisch gespritzten Oberfläche.

## Beschreibung

Die Erfindung betrifft ein Verfahren und eine Vorrichtung zur Bestimmung des Einschmelzgrads einer thermisch gespritzten Oberfläche sowie ein Verfahren und eine Vorrichtung zum automatischen Einschmelzen einer solchen Oberfläche.

Thermisch gespritzte Oberflächen dienen der Veränderung der Oberflächeneigenschaften von Werkstücken, beispielsweise zum Verschleiß- oder Korrosionsschutz, zur Mikrostrukturierung oder Reibungs- oder Haftungsverminderung. Derartige Verfahren zur Oberflächenbehandlung werden beispielsweise in der Firmenschrift "LINSPRAY® Gases and Know-how for Thermal Spraying" der Fa. Linde AG beschrieben.

Bei einer verbreiteten Variante des thermischen Aufspritzens werden durch einen auf das eigentliche Aufspritzen folgenden Arbeitsgang, das Einschmelzen, die Eigenschaften der aufgebrachten Schicht bzw. Schichten verändert, insbesondere lässt sich eine gas- und flüssigkeitsdichte Spritzschicht erzeugen und/oder die Haftung der Schicht auf der Werkstückoberfläche verbessern. Hierfür stehen Zusatzwerkstoffe, sogenannte selbstfließende Pulver (self-fluxing powders), zur Verfügung. Das selbstfließende Material wird dabei bis zum Einschmelzen erwärmt, wobei die vorher vorhandene Porosität beseitigt wird und durch eine metallurgische Reaktion eine stoffschlüssige Verbindung mit der Werkstückoberfläche entsteht. Hierfür ist in der Regel eine Temperatur im Bereich von 1020 bis 1140 °C notwendig, wozu zumeist eine Acetylen-Sauerstoff-Flamme verwendet wird.

Dieser Einschmelzvorgang erfolgt häufig manuell. Dabei werden alle Handhabungen, die Prozessführung und die Prozessüberwachung vom Einschmelzer durchgeführt, auch der Einschmelzprozess wird visuell überwacht. Hierfür dient insbesondere der "nasse Schein", der bei einer bestimmten Erwärmungstemperatur auftretende Eindruck eines nassen Werkstücks, der eine schmelzflüssige Oberfläche anzeigt. Der nasse Schein ist zumeist nur bei einer reduzierenden oder neutralen Einstellung einer Brennerflamme, mit der die Oberfläche erwärmt wird, gut sichtbar. Dabei muss das Einschmelzen von so kurzer Dauer sein, dass auch auf nicht waagrecht vorliegenden Oberflächen praktisch kein Verlaufen auftritt. Das Ziel ist die Herstellung einer uniformen Oberfläche.

Die manuelle Durchführung des Einschmelzens ist personalintensiv und für die betreffenden Personen mit einer erheblichen Hitze- und Aufmerksamkeitsbelastung verbunden. Darüber hinaus sind bei manuellen, visuell überwachten Tätigkeiten gewisse Variationen in den Prozessparametern, wie Erwärmungstemperatur und Erwärmungsdauer unvermeidlich, die zu Variationen in den Schichteigenschaften führen können.

Deshalb sind auch automatische Einschmelzverfahren entwickelt worden. So wird in der EP 0 412 510 A1 ein Verfahren zum automatischen Einschmelzen von thermisch gespritzten Oberflächen beschrieben, bei dem zumindest auf einem Teil des Gebiets, das gerade dem Einschmelzprozess durch einen Einschmelzbrenner unterzogen wird, mit einem berührungslosen Sensor die Temperatur oder eine erhöhte Reflexionsfähigkeit, die den nassen Schein anzeigt, ermittelt und zur Regelung des Vorschubs des Werkstücks bzw. des Brenners verwendet. Dabei wird die Temperatur im Einschmelzbereich mittels eines Pyrometers gemessen. Alternativ hierzu wird mit Hilfe eines Reflexionslichtdetektors das Auftreten des nassen Scheins registriert. Der Reflexionslichttaster kann senkrecht über der zu messenden Fläche angeordnet sein, so dass beim Fortschreiten des Einschmelzvorgangs in verstärktem Maße reflektiertes Licht in den Detektor zurückfällt. Der Reflexionslichttaster kann aber auch schräg über der zu messenden Fläche angeordnet sein, so dass bei matter Oberfläche diffus reflektiertes Licht in den Detektor zurückfällt, bei Aufkommen des nassen Scheins dieses jedoch abnimmt. In beiden Fällen kann der nasse Schein festgestellt und ein Steuersignal zur Regelung des Vorschubs erzeugt werden.

Dieses Verfahren erlaubt eine Überwachung des Einschmelzvorgangs, es wird jedoch eine Lichtquelle zur Erzeugung des Reflexionslichts benötigt. Darüber hinaus müssen Lichtquelle und Sensor entweder derart zur Oberfläche angeordnet sein, dass an der eingeschmolzenen Oberfläche spiegelnd reflektiertes Licht stets in den Sensor zurückreflektiert wird oder stets nicht in den Sensor zurückreflektiert wird. Insofern müssen Lichtquelle und Sensor eine konstante Ausrichtung zur Werkstückoberfläche aufweisen. Dieses erhöht den notwendigen Aufwand und schränkt die Anwendbarkeit ein.

Aufgabe der Erfindung ist es, ein Verfahren zur Bestimmung des Einschmelzgrads einer thermisch gespritzten Oberfläche anzugeben, bei der das Aufschmelzen der Oberfläche ohne Zuhilfenahme einer Lichtquelle und unabhängig von der Ausrichtung der Oberfläche zuverlässig bestimmt werden kann.

Diese Aufgabe wird mit einem Verfahren mit den Merkmalen des Anspruchs 1 gelöst.

Vorteilhafte Weiterbildungen sind in den jeweiligen Unteransprüchen gekennzeichnet.

Eine weitere Aufgabe ist es, eine Vorrichtung zur Durchführung des Verfahrens zu schaffen.

Diese Aufgabe wird mit einer Vorrichtung mit den Merkmalen des Anspruchs 6 gelöst.

Vorteilhafte Weiterbildungen sind in den hiervon abhängigen Unteransprüchen gekennzeichnet.

Eine weitere Aufgabe ist es, ein Verfahren zum automatischen Einschmelzen thermisch gespritzter Oberflächen zu schaffen, bei der das Aufschmelzen der Oberfläche zuverlässig überwacht werden kann.

Diese Aufgabe wird mit einem Verfahren mit den Merkmalen des Anspruchs 11 gelöst.

Eine weitere Aufgabe ist es, eine Vorrichtung zur Durchführung des Verfahrens zum automatischen Einschmelzen thermisch gespritzter Oberflächen zu schaffen.

Diese Aufgabe wird mit einer Vorrichtung mit den Merkmalen des Anspruchs 12 gelöst.

Vorteilhafte Weiterbildungen sind in den hiervon abhängigen Unteransprüchen gekennzeichnet.

Erfindungsgemäß ist erkannt worden, dass beim Fortschreiten des Einschmelzprozesses einer thermisch gespritzten Oberfläche eine Veränderung der Helligkeit bzw. der Farbe der Oberfläche auftritt, die einfach und sicher detektiert werden kann. Hierfür wird mit einem optischen Sensor, nämlich einer Kamera, die Bilder der Oberfläche aufnimmt, mindestens ein Teilbereich einer Oberfläche beobachtet, die dem Einschmelzvorgang unterzogen wird, bevorzugt im sichtbaren Spektralbereich. Aus den von der Kamera gelieferten Bilddaten werden Helligkeit und/oder Farbe der Oberfläche bestimmt und aus einer Veränderung der Helligkeit und/oder der Farbe der Oberfläche ein Einschmelzgrad ermittelt.

Hierbei wird das Eigenleuchten der glühenden Oberfläche beobachtet und ausgewertet. Das erfindungsgemäße Verfahren hat daher den Vorteil, dass keine weitere Beleuchtung erforderlich ist. Darüber hinaus lässt sich das Eigenleuchten unter nahezu beliebigen Winkeln zur einzuschmelzenden Oberfläche beobachten.

Unter Einschmelzgrad wird hier eine Größe verstanden, die das Fortschreiten des Einschmelzprozesses bzw. das Aufschmelzen der Oberfläche angibt. Der Einschmelzgrad kann beispielsweise angeben, ob das Einschmelzen erfolgt ist oder nicht. Der Einschmelzgrad kann aber auch anzeigen, ob noch kein Aufschmelzen erfolgt ist, ein noch nicht ausreichendes, ein ausreichendes oder ein optimales Aufschmelzen oder ob dieser Punkt bereits überschritten ist und die Gefahr des Verlaufens der Beschichtung droht. Der zu bestimmende Einschmelzgrad kann daher sowohl eine qualitative wie eine quantitative Größe sein.

Gemäß einer Ausführungsform der Erfindung wird der Einschmelzgrad aus einer Erhöhung der Helligkeit der Oberfläche ermittelt. Die von der Oberfläche emittierte Strahlungsintensität ist ein zuverlässiger Anzeiger für das Fortschreiten des Einschmelzvorgangs bzw. des Aufschmelzens der Oberfläche. Hierdurch ist auf besonders einfache Weise eine Bestimmung des Einschmelzgrads möglich.

Gemäß einer weiteren Ausführungsform der Erfindung wird die Helligkeit der Oberfläche in mindestens zwei unterschiedlichen Spektralbereichen gemessen, und der Einschmelzgrad wird aus einer Veränderung des Verhältnisses der Intensitäten in den unterschiedlichen Spektralbereichen ermittelt. Die relativen Helligkeiten aus unterschiedlichen Spektralbereichen stellen ein Maß für die Farbe bzw. einen Farbindex der Oberfläche dar. Beim Aufschmelzen der Oberfläche wird dabei insbesondere die Helligkeit in einem kurzwelligeren Spektralbereich höher im Verhältnis zu der in einem langwelligeren Spektralbereich, die Oberfläche erscheint daher "weißer". Das Aufschmelzen kann daher dadurch detektiert werden, dass eine hohe Lichtintensität in einem breiteren Spektralbereich beobachtet wird. Die relativen Helligkeiten in unterschiedlichen Spektralbereichen können dabei weitgehend unabhängig von der Art der Oberfläche sein, während vorher eine Ausgangsfarbe dominiert, die beispielsweise von der Art des verwendeten Pulvers abhängen kann. Diese Veränderung des Farbspektrums der Oberfläche ermöglicht eine besonders zuverlässige Detektion des Aufschmelzens bzw. Bestimmung des Einschmelzgrads.

Beide letztgenannten Ausführungsformen, die Ermittlung des Einschmelzgrads aus einer Veränderung der Helligkeit und die aus einer Veränderung der Farbe der Oberfläche, können auch miteinander kombiniert werden, um eine weiter erhöhte Genauigkeit zu erzielen.

Mit dem erfindungsgemäßen Verfahren wird aus den Bilddaten nicht die Oberflächentemperatur ermittelt, sondern aus der Helligkeit und/oder Farbe wird unmittelbar der Einschmelzgrad ermittelt. Dies erfolgt typischerweise durch die Analyse eines Wellenlängenbereichs von zumindest 20 nm, bzw. zumindest 50 nm. Es kann auch zweckmäßig sein, einen Wellenlängenbereich von zumindest 100 nm, bzw. zumindest 150 nm oder zumindest 200 nm in Hinblick auf Helligkeit bzw. Farbe zu analysieren.

Die Analyse erfolgt vorzugsweise durch einen Bildintensitätsvergleich im Farbraum, insbesondere im RGB-Raum.

Vorzugsweise wird zur Bestimmung der Veränderung der Helligkeit und/oder der Farbe eine Mehrzahl von Bildern eines einzuschmelzenden Bereichs der thermisch gespritzten Oberfläche eines Werkstücks aufgenommen. Hierfür wird mit der Kamera, die auf den einzuschmelzenden Bereich gerichtet ist, zunächst zumindest ein erstes Bild des einzuschmelzenden Bereichs aufgenommen. Das Bild kann das gesamte Gebiet der Werkstückoberfläche, das eingeschmolzen werden soll, umfassen, oder nur einen Teil desselben. Dieser kann bereits zuvor durch eine Wärmequelle bis zu der oder nahe an die zum Einschmelzen erforderliche Temperatur erwärmt worden sein.

Nach einer hierauf folgenden Wärmeanwendung auf den einzuschmelzenden Bereich wird nun zumindest ein weiteres Bild aufgenommen. Dieses zeigt einen Bereich der Oberfläche, in dem die Wärmeanwendung erfolgt ist, und der bevorzugt mit dem Bereich, der in dem ersten Bild aufgenommen worden ist, übereinstimmt oder zumindest ausreichend überlappt; wenn die einzuschmelzende Oberfläche genügend homogen ist und auch genügend gleichmäßig erwärmt wird, kann dies auch ein anderer Bereich der Oberfläche sein. Dabei ist es vorteilhaft, wenn das weitere Bild möglichst unmittelbar nach der erfolgten Erwärmung des Oberflächenbereichs aufgenommen wird.

In beiden Bildern wird die Helligkeit der Werkstückoberfläche bzw. des aufgenommenen Bereichs in einem oder mehreren Spektralbereichen ausgewertet, um eine Veränderung zu ermitteln. Hieraus kann der Einschmelzgrad bestimmt werden, insbesondere, ob die erfolgte Wärmeanwendung zu einem ausreichenden Aufschmelzen der Oberflächenmaterialien geführt hat.

Hat sich die Helligkeit bzw. die Farbe von dem ersten zu dem weiteren Bild verändert, so ist dies ein Hinweis auf ein erfolgtes Einschmelzen der Oberfläche. Insbesondere wird ein Erreichen eines ausreichenden Einschmelzgrads der Oberfläche dadurch detektiert, dass sich die Helligkeit bzw. das Verhältnis der Helligkeiten eines kurzwelligeren zu einem langwelligeren Spektralbereich erhöht hat und das Maß der Erhöhung der Helligkeit einen Schwellwert überschreitet. Dieser Schwellwert kann vorbestimmt sein; der Schwellwert kann aber auch in Abhängigkeit von der Helligkeit bzw. der spektralen Intensitätsverteilung selbst oder auch von anderen Größen, beispielsweise Materialeigenschaften oder geometrischen Größen der Oberfläche, ermittelt oder eingegeben werden. Da sich beim Einschmelzen die Helligkeit des Eigenleuchtens der Oberfläche deutlich erhöht bzw. die Farbe deutlich "weißer" wird, ist hierdurch auf eine einfache und sichere Weise eine Überwachung des Einschmelzvorgangs möglich.

Die Messung der Helligkeit der Oberfläche kann innerhalb des gesamten aufgenommenen Bildes geschehen oder nur in einem Teilbereich des Bildes, ebenso wie im gesamten spektralen Empfindlichkeitsbereich der Kamera oder nur in einem, beispielsweise durch optische Filter festgelegten, spektralen Teilbereich bzw., wenn die Veränderung des Farbspektrums ausgewertet werden soll, in mindestens zwei unterschiedlichen Spektralbereichen. Die Bildauswertung zur Messung der Helligkeit bzw. die Bestimmung der relativen Helligkeit in den unterschiedlichen spektralen Bereichen kann unmittelbar nach der Aufnahme geschehen, wobei das Ergebnis der ersten Messung gespeichert wird und für den Vergleich mit dem weiteren Bild zur Verfügung steht. Es kann aber auch das erste Bild gespeichert und nach Aufnahme des weiteren Bilds ausgewertet werden. Es können auch mehrere erste Bilder und mehrere weitere Bilder aufgenommen werden, um durch eine Mittelung oder Filterung, beispielsweise durch Elimination unbrauchbarer Pixel oder Bilder, eine höhere Genauigkeit zu erzielen.

In vorteilhafter Weise können kontinuierlich Bilder der Oberfläche aufgenommen werden, wobei jeweils nach einer erfolgten Wärmeanwendung auf die Oberfläche eine Auswertung der Intensität bzw. spektralen Intensitätsverteilung des Eigenleuchtens der Oberfläche erfolgt, um hieraus den Einschmelzgrad aufgrund einer Veränderung zu ermitteln. Dies ermöglicht eine besonders einfache Handhabung und eines sichere Überwachung des Einschmelzvorgangs.

Eine erfindungsgemäße Vorrichtung zur Bestimmung eines Einschmelzgrads einer thermisch gespritzten Oberfläche umfasst mindestens eine Kamera zur Beobachtung mindestens eines Teilbereichs einer einzuschmelzenden Werkstückoberfläche. Ferner umfasst die Vorrichtung eine Auswerteeinrichtung, die mit der Kamera zur Übernahme der von der Kamera gelieferten Daten verbunden ist und zur Auswertung der von der Kamera gelieferten Daten zur Bestimmung der Helligkeit und/oder Farbe der Oberfläche und zur Ermittlung des Einschmelzgrads der Oberfläche aus einer Veränderung der Helligkeit und/oder Farbe eingerichtet ist. Die Auswerteeinrichtung umfasst hierzu auch eine Speichereinrichtung zur Speicherung mindestens eines Helligkeits- und/oder Farbwerts der Oberfläche bzw. zur Speicherung der von der Kamera gelieferten Daten.

Die Kamera kann insbesondere eine Flächenkamera sein, die ein zweidimensional ausgedehntes Gebiet der Werkstückoberfläche aufnimmt. Dies hat den Vorteil, dass besonders zuverlässige und aussagekräftige Daten aufgenommen werden können. Die Kamera kann aber auch beispielsweise als Zeilenkamera ausgebildet sein, die ein im Wesentlichen eindimensional ausgedehntes Gebiet der Werkstückoberfläche aufnimmt. Dies hat den Vorteil einer besonders kostengünstigen Ausführung. Die Kamera kann für eine besonders detaillierte spektrale Analyse der Strahlung der Werkstückoberfläche auch als Spektrometer ausgebildet sein.

Gemäß einer bevorzugten Ausführungsform ist die Kamera eine digitale Kamera. Dies hat den Vorteil, dass störungsarme und direkt digital auswertbare Daten zur Auswertung zur Verfügung stehen.

In vorteilhafter Weise kann die Auswerteeinrichtung als digitaler Rechner, insbesondere als Mikroprozessor oder Computer ausgebildet sein. Die Bestimmung der Helligkeit und/oder Farbe der einzuschmelzenden Werkstückoberfläche kann in diesem Fall durch digitale Bildverarbeitung geschehen. Dies hat den weiteren Vorteil, dass mit an sich bekannten Bildverarbeitungsoperationen digital die Helligkeit bzw. die relativen Helligkeiten in den unterschiedlichen Spektralbereichen und die Helligkeitsänderung bzw. die Farbänderung ermittelt werden können. Ferner können mit bekannten Bildverarbeitungsmethoden die Bilder geglättet, die Bilddaten zur Elimination von gestörten Pixeln oder Bildern gefiltert, Reflexe eliminiert und übereinstimmende Bereiche in teilweise überlappenden Bildern ermittelt werden. Außerdem kann die Auswertung auf vorbestimmte oder durch die Auswertung ermittelte, beispielsweise übereinstimmende und/oder ungestörte Bereiche beschränkt werden. Ebenso können weitere Störeinflüsse, wie etwa die Raumbeleuchtung und/oder Strahlung der Wärmequelle, rechnerisch eliminiert oder vermindert werden. Hierdurch sind zuverlässigere Aussagen über das Fortschreiten des Aufschmelzens möglich.

Gemäß einer Ausführungsform der Erfindung ist die Kamera eine Farbkamera, insbesondere eine RGB-Farbkamera. In diesem Fall können die aufgenommenen Bilder jeweils RGB-Teilbilder enthalten, so dass die unterschiedlichen Spektralbereiche den RGB (Rot Grün Blau) - Empfindlichkeiten beispielsweise einer Farbvideokamera entsprechen können. Damit können die RGB-Ausgänge einer handelsüblichen Farbvideokamera direkt zur Übermittlung an die Auswerteeinrichtung und die RGB-Bilder zur Auswertung der Farbe genutzt werden. Die Veränderung der Farbanteile der Oberfläche beim Aufschmelzen lässt sich dann insbesondere durch eine höhere G-Helligkeit im Verhältnis zur Helligkeit im R-Bild erkennen. Dies ermöglicht auf eine besonders einfache Weise eine sichere Bestimmung des Einschmelzgrads.

Zum Nachweis der Veränderung der Farbe beim Einschmelzvorgang können aber auch andere Farbmodelle genutzt werden. So kann beispielsweise auch ein HSB (Farbton / Hue, Sättigung / Saturation, Helligkeit / Brightness) - Farbmodell verwendet werden; dieses hat den Vorteil, dass direkt Farbton und Helligkeit zur Auswertung zur Verfügung stehen und beide zur Bestimmung des Einschmelzgrads genutzt werden können. Das jeweilige Farbmodell kann innerhalb der Kamera oder innerhalb der Auswerteeinrichtung realisiert werden.

Die Bilder in unterschiedlichen Spektralbereichen können aber auch nacheinander erzeugt werden, indem beispielsweise nacheinander unterschiedliche Filter in den Strahlengang eingebracht werden, oder die Bilder können gleichzeitig durch unterschiedliche Filter mit mehreren Kameras bzw. Sensoren aufgenommen werden. In diesem Fall kann auch eine kostengünstige Schwarz-Weiß-Kamera mit einer entsprechenden Filtervorrichtung verwendet werden. Hierbei sind zwei unterschiedliche Spektralbereiche ausreichend, in vorteilhafter Weise können aber auch mehr als zwei Spektralbereiche verwendet werden, um eine zuverlässigere Detektion des Aufschmelzens zu ermöglichen. Insbesondere ist es vorteilhaft, unterschiedliche Spektralbereiche aus demjenigen Teil des optischen Spektrums zu verwenden, in dem das Eigenleuchten bei dem beim Einschmelzen üblichen Temperaturbereich von ca. 1020 °C bis 1140 °C leicht zu beobachten ist, also im roten bis zum grünen Spektralbereich.

In einer weiteren Ausführungsform der Erfindung ist es deshalb vorgesehen, die Farbe und/oder die Helligkeit in einem Spektralbereich von ca. 550 nm bis 650 nm zu bestimmen. Um die Farbe zu ermitteln, kann es dabei ausreichen, innerhalb dieses Bereichs die relativen Helligkeiten in zwei unterschiedlichen Teilbereichen von jeweils ca. 20 nm bis 50 nm Breite zu bestimmen. Hierdurch ist auf eine besonders einfache und zuverlässige Weise eine Detektion des Aufschmelzens der Oberfläche möglich.

Wenn die Kamera eine Schwarz-Weiß-Kamera ist und lediglich die Helligkeit der Oberfläche gemessen wird, ist es ebenfalls bevorzugt, diese in einem Spektralbereich von ca. 550 nm bis 650 nm zu ermitteln, da in diesem Bereich das Eigenleuchten der Oberfläche beim Einschmelzen leicht messbar ist.

Beim Einschmelzen kommt es darauf an, dass gerade so viel Energie zum Erwärmen aufgewandt wird, dass die Oberfläche aufschmilzt. Wird mehr Energie eingebracht, so besteht die Gefahr, dass die Beschichtung verläuft, abtropft oder verdampft. Wie die Oberfläche andererseits nicht so weit und so lange erwärmt, wie zum Aufschmelzen erforderlich ist, so sind Haltbarkeit, Dichtigkeit, Gleichmäßigkeit oder andere erwünschte Eigenschaften der Schicht nicht zu gewährleisten.

Gemäß einer vorteilhaften Ausführungsform ist daher eine Anzeigeeinrichtung zur optischen oder akustischen Anzeige des Aufschmelzens der Oberfläche vorgesehen. Hierdurch wird ein Benutzer beispielsweise beim manuellen Einschmelzen in der Erkennung des Aufschmelzens unterstützt. Dies ermöglicht dem Einschmelzer, die Brennereinstellungen, den Abstand des Brenners zur Oberfläche oder die Erwärmungszeit entsprechend anzupassen, um eine optimale Beschichtung zu erreichen. Hierdurch kann die visuelle Kontrolle durch Beobachtung des "nassen Scheins" ersetzt oder ergänzt werden. Es kann auch eine Speichereinrichtung vorgesehen sein zur Registrierung der Aufschmelzgrade bei einem Einschmelzvorgang; diese Daten können auch zur Qualitätssicherung verwendet werden. Schließlich kann eine Verbindung zu einer Prozesssteuerung für einen automatischen Einschmelzprozess vorgesehen sein.

Ein erfindungsgemäßes Verfahren zum automatischen Einschmelzen thermisch gespritzter Oberflächen sieht vor, dass eine Wärmequelle und eine Kamera automatisch gesteuert über die einzuschmelzende Werkstückoberfläche bewegt werden, so dass mit der Wärmequelle die Oberfläche erwärmt wird und mit der Kamera Bilder der einzuschmelzenden Oberfläche aufgenommen werden. Dabei können Wärmequelle und Kamera über ein stationär gelagertes Werkstück bewegbar sein oder umgekehrt, oder das Werkstück einerseits und Kamera und Wärmequelle andererseits können jeweils Bewegungskomponenten ausführen.

Mit einer Wärmequelle wird zumindest ein Teilbereich der Oberfläche erwärmt. Dieser wird mit einer Kamera beobachtet, aus den mit der Kamera aufgenommenen Bilddaten wird die Helligkeit und/oder Farbe der Oberfläche bestimmt, und aus einer Veränderung der Helligkeit und/oder der Farbe wird ein Einschmelzgrad ermittelt. Dieser wird zur Steuerung der Bewegung von Wärmequelle und Kamera relativ zur einzuschmelzenden Oberfläche und/oder der Funktion der Wärmequelle verwendet, so dass ein gleichmäßiger und ausreichender Einschmelzgrad erzielt wird.

Dabei kann sowohl die Geschwindigkeit als auch die Richtung der Relativbewegung der Wärmequelle zur Oberfläche in Abhängigkeit vom Einschmelzgrad gesteuert werden, als auch der Abstand der Wärmequelle, beispielsweise eines Brenners, oder die Einstellungen der Wärmequelle, die etwa die Temperatur oder die Größe oder Form einer Flamme eines Brenners einzustellen gestatten. Zur Ermittlung des Einschmelzgrads wird bevorzugt die Bewegung der Kamera relativ zur Oberfläche synchron zu der der Wärmequelle gesteuert.

Das erfindungsgemäße Verfahren erlaubt ein sicheres, gleichmäßiges Einschmelzen unabhängig von der Geometrie der Oberfläche, wobei keine zusätzliche Beleuchtung zur Detektion des Aufschmelzens erforderlich ist.

Gemäß einer Ausführungsform des erfindungsgemäßen Verfahrens wird mit der Wärmequelle zumindest ein Teilbereich einer einzuschmelzenden Oberfläche erwärmt, bis dieser eine Temperatur möglichst bereits in der Nähe für das Aufschmelzen erforderlichen Temperatur erreicht hat. Die Wärmequelle wird dann von diesem Teilbereich entfernt oder ausgeschaltet, und mit der Kamera wird mindestens ein erstes Bild des Teilbereichs aufgenommen. Die Wärmequelle wird nun derart gesteuert, dass eine weitere Wärmeanwendung auf den einzuschmelzenden Bereich erfolgt. Die Wärmequelle wird wiederum von dem erwärmten Bereich entfernt oder wird ausgeschaltet. Es wird nun zumindest ein weiteres Bild aufgenommen. Dieses zeigt den Bereich der Oberfläche, in dem die Wärmeanwendung erfolgt ist, und der bevorzugt der gleiche ist, in dem das erste Bild aufgenommen worden ist, oder sich mit diesem in wesentlichem Maße überlappt. Je nach Gleichmäßigkeit der Oberfläche und der erfolgten Erwärmung kann dies auch ein anderer Bereich der einzuschmelzenden Oberfläche sein.

In beiden Bildern wird die Helligkeit der Werkstückoberfläche bzw. des aufgenommenen Bereichs in einem oder mehreren Spektralbereichen in der oben beschriebenen Weise ausgewertet, um eine Veränderung zu ermitteln und hieraus einen Einschmelzgrad der Oberfläche zu bestimmen. Der ermittelte Einschmelzgrad wird mit einem vorbestimmten Sollwert verglichen, um zu ermitteln, ob der Einschmelzprozess für den betreffenden Teil der Werkstückoberfläche abgeschlossen ist.

Ist der vorbestimmte Sollwert für den Einschmelzgrad noch nicht erreicht, so werden Wärmequelle und Kamera derart gesteuert, dass eine weitere Wärmeanwendung auf den einzuschmelzenden Bereich bzw. den Teilbereich erfolgt und danach erneut zumindest ein Bild des Teilbereichs aufgenommen wird. Dieses wird in der beschriebenen Weise ausgewertet, um einen neuen Einschmelzgrad zu bestimmen. Wenn auch mit dem neuen Einschmelzgrad der vorbestimmte Sollwert für den Einschmelzprozess noch nicht erreicht ist, werden die entsprechenden Verfahrensschritte wiederholt.

Ist der vorbestimmte Sollwert für den Einschmelzgrad erreicht, so erfolgt eine weitere Wärmeanwendung mit nachfolgender Aufnahme und Auswertung von Bildern in einem weiteren Teilbereich der einzuschmelzenden Oberfläche. Ist der vorbestimmte Sollwert für die gesamte einzuschmelzende Oberfläche des Werkstücks erreicht, so ist das erfindungsgemäße Verfahren zum automatischen Einschmelzen beendet. Wärmequelle und Kamera können in diesem Fall zu einer Ruheposition verfahren und/oder ausgeschaltet werden, oder es kann das automatische Einschmelzen an einem weiteren Werkstück begonnen werden.

Die erfindungsgemäß ermittelte Veränderung bzw. der Schwellwert für die Veränderung von Helligkeit und/oder Farbe der Oberfläche kann sich daher insbesondere auf die Veränderung der ermittelten Werte von Helligkeit und/oder Farbe nach einer erfolgten Erwärmung im Vergleich zu den Werte vor der Erwärmung beziehen, wobei derselbe Oberflächenbereich abwechselnd einer Erwärmung und der Beobachtung durch die Kamera unterzogen wird. Rotiert das Werkstück um eine Achse und wird von einer stationären Wärmequelle ein Teilbereich der Oberfläche zyklisch erwärmt und von einer ebenfalls stationären Kamera zyklisch beobachtet, so kann sich der Schwellwert beispielsweise auf einen Umlauf oder auf eine festgelegte Zeitspanne beziehen. Es ist aber beispielsweise auch möglich, am Beginn des erfindungsgemäßen Verfahrens die Oberfläche derart zu erwärmen, dass ein Aufschmelzen stattfindet und danach Funktion und Bewegung der Wärmequelle so zu regeln, dass keine weitere wesentliche Veränderung von Helligkeit und/oder Farbe stattfindet. Auch auf diese Weise kann, abhängig von der jeweiligen Art der Bewegungsführung, das gewünschte Ergebnis erzielt werden.

Eine erfindungsgemäße Vorrichtung zur Durchführung des Verfahrens zum automatischen Einschmelzen thermisch gespritzter Oberflächen umfasst eine Halterung, auf der ein Werkstück derart gehalten werden kann, dass es zum Einschmelzen der Oberfläche zur Verfügung steht. Ferner umfasst die Vorrichtung mindestens eine Wärmequelle, insbesondere einen Brenner, zum Aufschmelzen der thermisch gespritzten Oberfläche des Werkstücks, sowie mindestens eine Kamera zum Aufnehmen von Bildern der Oberfläche des Werkstücks. Mit Hilfe eines steuerbaren Bewegungsmechanismus können Wärmequelle und Kamera derart über die einzuschmelzende Oberfläche des Werkstücks geführt werden, dass die Kamera auf einen Teilbereich der Werkstückoberfläche gerichtet ist, der unmittelbar zuvor der Wärmeeinwirkung der Wärmequelle ausgesetzt gewesen ist. Weiterhin umfasst die Vorrichtung eine Auswerteeinrichtung zur Auswertung der von der Kamera aufgenommenen Bilder und zur Bestimmung eines Einschmelzgrads der Oberfläche aus dem Vergleich der Helligkeiten der Oberfläche in einem oder mehreren Spektralbereichen vor und nach einer Einwirkung der Wärmequelle auf die einzuschmelzende Oberfläche bzw. auf den Teilbereich der Werkstückoberfläche. Ferner ist eine Steuerungseinrichtung vorgesehen zur Steuerung der Relativbewegung von Wärmequelle und Kamera einerseits und Werkstück andererseits, so dass insbesondere eine wiederholte Wärmeeinwirkung auf die einzuschmelzende Oberfläche bzw. einen Teilbereich möglich ist und eine wiederholte Aufnahme von Bildern der Oberfläche bzw. des Teilbereichs durch die Kamera, bis ein gewünschter Einschmelzgrad erreicht ist. Ebenso kann eine abwechselnde oder eine kontinuierliche Einwirkung der Wärmequelle und Bildaufnahme durch die Kamera vorgesehen sein. Auswerte- und Steuereinrichtung können auch als Einheit ausgebildet sein.

Kamera und Wärmequelle können fest miteinander verbunden sein, so dass die Kamera stets auf einen Bereich der Werkstückoberfläche gerichtet ist, der bevorzugt unmittelbar neben dem Einwirkbereich der Wärmequelle liegt. Es kann aber auch eine voneinander unabhängige Steuerung von Wärmequelle und Kamera vorgesehen sein derart, dass das Blickfeld der Kamera dem Wirkungsbereich der Wärmequelle benachbart ist, so dass der von der Kamera aufgenommene Oberflächenbereich möglichst kurz zuvor der Wärmeeinwirkung ausgesetzt gewesen ist.

In einer Ausführungsform ist die Kamera mit einer Wärmequelle, beispielsweise einem Brennstoff-Sauerstoff-Brenner, insbesondere einem Acetylen-Sauerstoff-Brenner, zum Einschmelzen einer thermisch beschichteten Werkstückoberfläche derart gekoppelt, dass die Kamera gemeinsam mit der Wärmequelle über die Werkstückoberfläche bewegt werden kann. Dabei können Wärmequelle und die Kamera über ein stationär gelagertes Werkstück bewegbar sein oder umgekehrt, oder das Werkstück und die Einheit aus Kamera und Wärmequelle können jeweils Bewegungskomponenten ausführen. Es können auch für die Wärmequelle weitere Freiheitsgrade der Bewegung vorgesehen sein, insbesondere eine Veränderung des Abstands oder der Ausrichtung zur Werkstückoberfläche.

Besonders vorteilhaft ist es, wenn die Kamera so mit der Wärmequelle verbunden ist, dass der zur Bestimmung der Helligkeit und/oder Farbe beobachtete Bereich dem Wirkungsbereich der Wärmequelle dicht benachbart ist, beispielsweise nur ca. 1 cm von diesem entfernt. In diesem Fall ist es möglich, Wärmequelle und Kamera so zu bewegen, dass die einzuschmelzende Werkstückoberfläche unmittelbar nach der Erwärmung durch die Wärmequelle aufgenommen wird, ohne dass die aufgenommenen Bilder durch die Wirkung der Wärmequelle, beispielsweise durch die Flamme eines Einschmelzbrenners, beeinträchtigt werden. Dies hat den Vorteil, dass das Aufschmelzen der Oberfläche besonders zuverlässig detektiert werden kann und beispielsweise ein unvollständiges Aufschmelzen sofort korrigiert werden kann, ohne eine zwischenzeitlich abgekühlte Werkstückoberfläche wieder von neuem erwärmen zu müssen.

In vorteilhafter Weise kann zwischen Kamera und Wärmequelle eine Abschirmung vorgesehen sein, die beispielsweise als reflektierende Platte oder auch als Wärmeschutzfilter ausgebildet sein kann, um eine Beeinträchtigung der Kamera durch die direkte Einwirkung der Wärmequelle, insbesondere der Flamme eines Einschmelzbrenners, zu verhindern.

Die erfindungsgemäße Vorrichtung ist einfach aufgebaut und ermöglicht durch eine einfache und sichere Detektion des Aufschmelzens der thermisch gespritzten Oberfläche die Erzielung einer gleichmäßig hohen Oberflächenqualität.

Die Erfindung wird anhand einer Zeichnung beispielhaft erläutert. Es zeigen dabei:
- Figur 1:: den Ablauf des erfindungsgemäßen Verfahrens zur Überwachung des Einschmelzens thermisch gespritzter Oberflächen in schematischer Darstellung,
- Figur 2:: die erfindungsgemäße Vorrichtung zur Überwachung des Einschmelzens thermisch gespritzter Oberflächen,
- Figur 3:: den Ablauf des erfindungsgemäßen Verfahrens zum automatischen Einschmelzen thermisch gespritzter Oberflächen in schematischer Darstellung,
- Figur 4:: die erfindungsgemäße Vorrichtung zum automatischen Einschmelzen thermisch gespritzter Oberflächen.

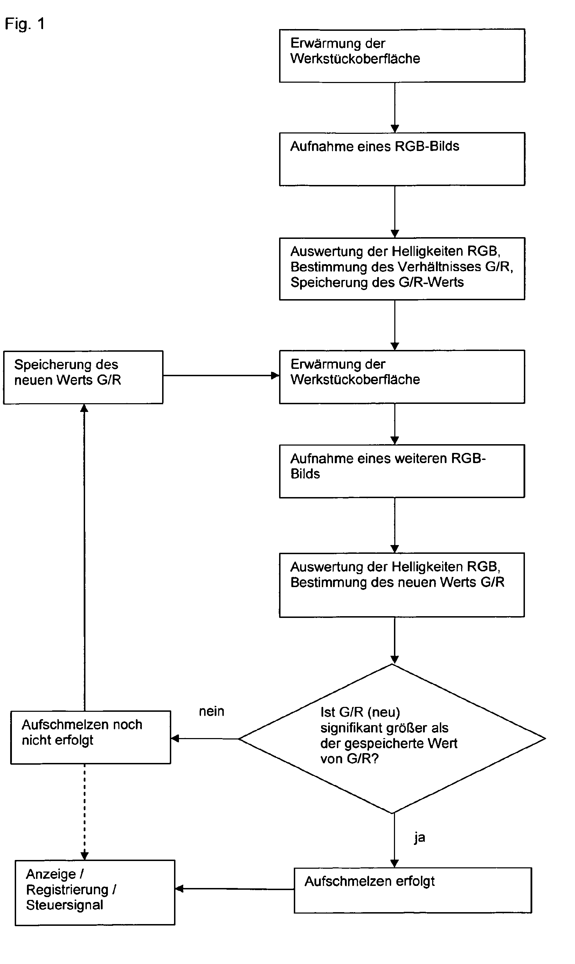

In dem in Fig. 1 beispielhaft dargestellten Verfahren wird, nachdem die einzuschmelzende, thermisch gespritzte Oberfläche eines Werkstücks nahe an die Aufschmelztemperatur erwärmt worden ist, mit einer Farbvideokamera ein Bild eines bestimmten Bereichs der Oberfläche aufgenommen. Diese Bild, das aus den drei Anteilen Rot, Grün und Blau besteht, wird in einen zur Bildverarbeitung geeigneten Computer übertragen, die jeweiligen Helligkeitswerte der Oberfläche in den drei Teilbildern werden bestimmt, und die Verhältnisse zwischen den Helligkeitswerten werden berechnet und gespeichert.

Nach einer weiteren Erwärmung der Oberfläche mit Hilfe eines Einschmelzbrenners wird ein weiteres RGB-Bild desselben Bereichs aufgenommen. Dieses wird ebenfalls in den Bildverarbeitungsrechner übertragen, und die jeweiligen Helligkeiten in den drei Teilbildern und deren Verhältnisse zueinander werden bestimmt.

Durch Vergleich der Helligkeitsverhältnisse im R- und im G-Bild kann nun eine Farbänderung erkannt werden. Hat die Helligkeit im grünen Spektralbereich im Verhältnis zu der im roten Spektralbereich wesentlich zugenommen, so kann hieraus auf das Aufschmelzen der Oberfläche geschlossen werden. Die Helligkeitsverhältnisse zum blauen Bild können zur zusätzlichen Absicherung des Ergebnisses verwendet werden.

Hat sich der G/R-Farbindex nicht signifikant verändert, so ist noch kein Aufschmelzen erfolgt. In diesem Fall ersetzt der zuletzt gemessene G/R-Wert im Speicher den zuvor gespeicherten, die Werkstückoberfläche wird weiter erwärmt, und die beschriebene Vorgehensweise wird wiederholt.

Die beim Aufschmelzen beobachtete signifikante Veränderung der Helligkeit und/oder Farbe der Oberfläche geht über die der dabei erfolgten Temperaturänderung entsprechende Veränderung hinaus bzw. ist davon unabhängig. Während mit einem Pyrometer aus der Strahlung einer Oberfläche nach dem Stefan-Boltzmann-Gesetz die Temperatur ermittelt wird, wird erfindungsgemäß eine Veränderung der Strahlung der Oberfläche detektiert und ausgewertet, die nicht einer Veränderung der Temperatur entspricht, sondern insbesondere auf einer Veränderung der Emissivität (Emissionsgrad) beruht. Diese Veränderung der Strahlungsintensität bzw. Farbe ist deutlich von Veränderungen aufgrund der Temperaturänderungen zu unterscheiden und ermöglicht damit eine besonders zuverlässige Bestimmung des Einschmelzgrads.

Die Helligkeiten selbst hängen von vielen Parametern ab, wie beispielsweise den Eigenschaften des thermisch aufgespritzten Pulvers, der Empfindlichkeit und der spektralen Empfindlichkeitsfunktion der Kamera, der Schrägstellung des beobachteten Teilbereichs der Oberfläche und der vor dem oder beim Aufschmelzen vorliegenden Oberflächentemperatur. Auch die Helligkeitsverhältnisse können z. T. von diesen Parametern abhängen. Aus einer Veränderung der Farbe, insbesondere aus dem "Weißerwerden" des Eigenleuchtens der Oberfläche, kann andererseits mit hoher Sicherheit auf das Aufschmelzen geschlossen werden. Welche Veränderung der Farbe ausreichend ist, um das Einschmelzen anzuzeigen, kann generell vorbestimmt oder zuvor durch einen Vorversuch oder "Lernlauf" ermittelt worden und in den Rechner eingegeben worden sein. Dies kann beispielsweise auch bei oder zusätzlich zu einem häufig sowieso notwendigen Weißabgleich der Kamera erfolgen.

Je nach Ergebnis der Auswertung kann eine Anzeige über das erfolgte oder nicht erfolgte Aufschmelzen der Oberfläche ausgegeben werden, die zur Veranlassung weiterer Maßnahmen durch eine automatisch arbeitende Vorrichtung oder durch einen Bediener verwendet werden kann. Es kann auch ein Einschmelzgrad ermittelt und ggf. angezeigt werden, der beispielsweise angibt, ob noch kein Aufschmelzen erfolgt ist, ein noch nicht ausreichendes, ein ausreichendes oder ein optimales Aufschmelzen oder ob dieser Punkt bereits überschritten ist und die Gefahr des Verlaufens der Beschichtung droht.

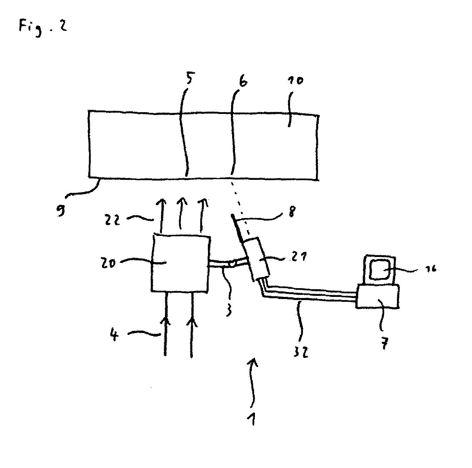

Die in Fig. 2 dargestellte Vorrichtung 1 umfasst einen Einschmelzbrenner 20, beispielsweise einen Acetylen-Sauerstoff-Brenner, der über Gaszuleitungen 4 versorgt wird. Hiermit starr gekoppelt ist eine Farbvideokamera 21, die über RGB-Signalleitungen 32 mit einer Auswerteeinrichtung, insbesondere einem Computer 7, verbunden ist, der zur Auswertung der von der Kamera gelieferten Bilddaten entsprechend dem zu Fig. 1 beschriebenen Verfahren eingerichtet ist. Der Computer kann auch eine Anzeigeeinrichtung 16 umfassen zur Darstellung des Ergebnisses der Auswertung.

Wenn der Brenner 20 auf die einzuschmelzende Oberfläche 9 eines Werkstücks 10 gerichtet wird, wird diese in einem Einwirkungsbereich 5 erwärmt. Das Blickfeld 6 der Kamera 21 befindet sich aufgrund der Kopplung 3 mit dem Brenner direkt benachbart zum Einwirkungsbereich 5, beispielsweise nur ca. 1 cm von diesem entfernt. Hierdurch wird vermieden, dass die von der Kamera gelieferten Bilddaten durch die Flamme 22 des Brenners gestört werden. Zusätzlich kann hierfür eine Abschirmung 8 vorgesehen sein, beispielsweise ein Blech oder ein optisches Filter. Ebenso kann ein Wärmeschutzfilter vor dem Objektiv der Kamera angeordnet sein.

Die Einheit aus Brenner 20 und Kamera 21 kann nun im Verhältnis zur Werkstückoberfläche derart bewegt werden (in Fig. 2 durch einen Doppelpfeil dargestellt), dass die Kamera auf einen Bereich der Werkstückoberfläche gerichtet ist, der kurz zuvor von dem Brenner erwärmt worden ist. Dieser Bereich kann durch Hin- und Herbewegung mehrfach erwärmt und mehrfach beobachtet werden; dies lässt sich beispielsweise auch durch eine gleichförmige Rotationsbewegung erreichen. Wenn der Brenner so eingestellt ist, dass die Aufschmelztemperatur der Oberfläche nach einer gewissen Einwirkungszeit erreicht wird, so wird nach einer entsprechenden Beaufschlagung des Einwirkungsbereichs das Aufschmelzen der Oberfläche stattfinden, und bei einer wiederholten Aufnahme mit der Kamera wird die Auswerteeinrichtung diese detektieren und ggf. anzeigen.

Ist die Einwirkzeit des Brenners zu gering, so findet noch keine Aufschmelzung statt. Anderseits kann durch die sichere Detektion des Aufschmelzens vermieden werden, dass nach erfolgtem Aufschmelzen der gleiche Bereich der Oberfläche nochmals mit dem Brenner beaufschlagt wird, was zu einem unerwünschten Verlaufen oder gar zu einem Verdampfen der Beschichtung führen kann. Durch eine entsprechende Bedienung bzw. Einstellung des Brenners kann daher eine gleichmäßige, optimale Beschichtung erzielt werden.

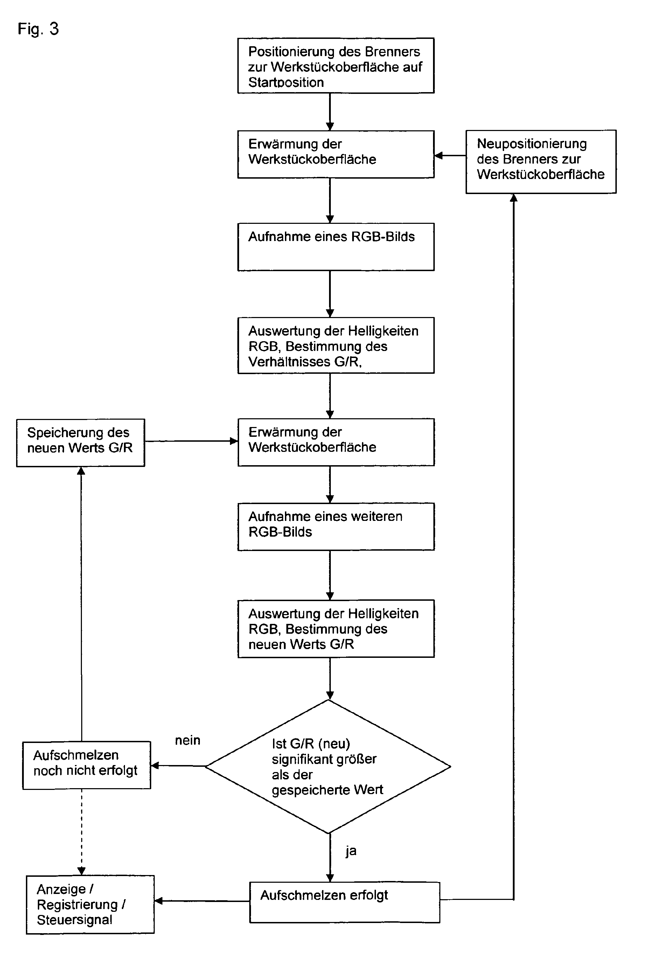

Bei einem automatischen Verfahren zum Einschmelzen einer thermisch beschichteten Oberfläche, das beispielhaft in Fig. 3 dargestellt ist, wird ein Einschmelzbrenner so positioniert, dass ein bestimmter Bereich der einzuschmelzenden Werkstückoberfläche mit der Flamme des Brenners beaufschlagt wird. Nach einer ersten Erwärmung dieses Bereichs wird mit der Kamera ein RGB-Bild dieses Bereichs aufgenommen. Wie in dem zu Fig. 1 beschriebenen Verfahren wird dieses Bild ausgewertet, um einen Farbwert der Oberfläche zu ermitteln, der Bereich nochmals erwärmt, und wieder ein Farbwert der Oberfläche ermittelt und mit dem vorigen verglichen. Wie oben beschrieben, kann erfindungsgemäß hieraus das Aufschmelzen der Oberfläche detektiert werden.

Gemäß Fig. 3 wird, sofern das Aufschmelzen noch nicht erfolgt ist, eine wiederholte Erwärmung desselben Bereichs vorgenommen und das Verfahren von diesem Schritt an wiederholt. Sofern das Aufschmelzen detektiert wurde, wird andererseits der Brenner über einen anderen Bereich der Oberfläche positioniert und das Verfahren von neuem begonnen. Auf diese Weise kann die gesamte einzuschmelzende Oberfläche bearbeitet werden.

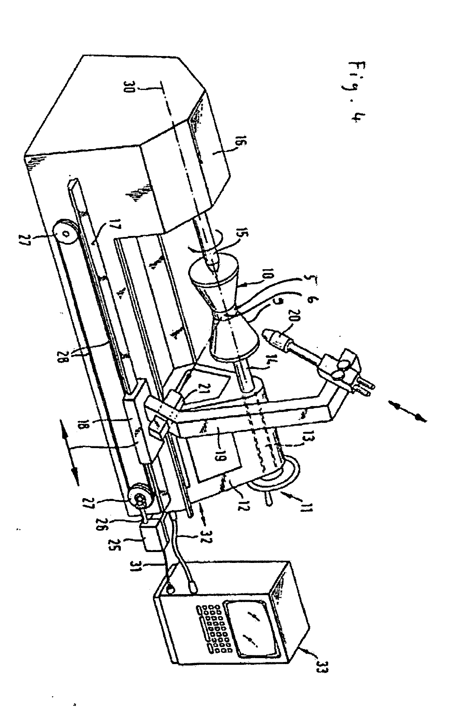

Zur Aufnahme der Bilder kann die Wärmequelle jeweils von dem betreffenden Bereich der Oberfläche entfernt werden. Bei einer Erwärmung eines ringförmigen Bereichs der Oberfläche eines rotationssymmetrischen Werkstücks ist dies nicht notwendig, wie anhand der Vorrichtung gemäß Fig. 4 ersichtlich ist.

Gemäß Fig. 4 umfasst eine solche erfindungsgemäße Vorrichtung 2 zum automatischen Einschmelzen thermisch gespritzter Oberflächen eine Einspannvorrichtung 11, bestehend aus einem Einspannschlitten 12, einer Arretierspindel 13 mit Einspanndorn 14 und Gegendorn 15. Ein Werkstück 10, das eine thermisch gespritzte Oberfläche 9 aufweist, ist mit Hilfe der Einspannvorrichtung eingespannt. Über den Gegendorn 15 kann das Werkstück in Rotation versetzt werden. Hierfür ist ein in dem Gehäuse untergebrachter Antrieb vorgesehen, der von einer Versorgungs- und Steuereinheit 33 steuerbar ist.

Parallel zur Drehachse des Werkstücks ist eine Schiene 17 angeordnet, auf der sich ein Schlitten 18 mit einem daran angeordneten Haltearm 19 gesteuert bewegen kann. Hierfür sind in Fig. 4 symbolisch ein Motor 25, eine mit Getriebe versehene Antriebswelle 26, Umlenkrollen 27 und ein Riemen 28 gezeigt. Ebenso kann ein anderer Bewegungsmechanismus für den Schlitten vorgesehen sein, wie beispielsweise eine Spindel oder auch ein Linearantrieb. Zusätzlich können weitere Steuer- und Regelungselemente wie beispielsweise Positionsgeber oder Endschalter vorgesehen sein (nicht dargestellt). Über eine Verbindungsleitung 31 ist die Versorgungs- und Steuereinheit 33 mit dem Motor verbunden, außerdem sind weitere Signalleitungen 32 zur Übertragung weiterer Daten vorgesehen, wie beispielsweise Positions-, Geschwindigkeits-, Temperatur- oder Bilddaten.

Am Haltearm 19 ist ein Einschmelzbrenner 20, beispielsweise ein Acetylen-Sauerstoff-Brenner, angeordnet, sowie eine Kamera 21, die auf einen Bereich 6 der Oberfläche des Werkstücks gerichtet ist, der bei der Rotation des Werkstücks kurz zuvor im Einwirkbereich 5 des Einschmelzbrenners 20 gelegen hatte. Die Kamera ist mit der Versorgungs- und Steuereinheit 33 verbunden, auch der Brenner kann von dieser geregelt werden.

Zum automatischen Einschmelzen wird das Werkstück 10, das eine thermisch gespritzte Oberfläche aufweist, die eingeschmolzen werden soll, in Rotation versetzt. Die Kamera ist im Verhältnis zum Brenner so angeordnet, dass die Kamera stets einen Bereich der Oberfläche beobachtet, der in Bewegungsrichtung direkt hinter dem Einwirkungsbereich des Brenners liegt. Das Blickfeld der Kamera erfasst also einen Bereich, der kurz zuvor von der Flamme des Brenners beaufschlagt und erwärmt worden ist. Bei Rotation des Werkstücks 10 wird daher derselbe Bereich der Werkstückoberfläche wiederholt erwärmt und von der Kamera aufgenommen, wobei jeweils der Einschmelzgrad ermittelt werden kann. Dies gilt auch dann, wenn der Schlitten 18 in der durch den Doppelpfeil in Fig. 4 angedeuteten Richtung gleichförmig bewegt wird, solange die Vorschubgeschwindigkeit gering genug ist. In diesem Fall kann aufgrund der Messung des Einschmelzgrads die Vorschubgeschwindigkeit des Schlittens derart geregelt werden, dass das Aufschmelzen der Oberfläche erzielt wird, aber danach der betreffende Oberflächenbereich den Einwirkungsbereich des Brenners wieder verlässt. Stattdessen oder zusätzlich könnten auch beispielsweise die Einstellung des Brenners, der Abstand des Brenners zur Oberfläche oder andere Parameter des Brenners oder der Bewegung geregelt werden. Hierdurch kann auf einfache Weise ein optimales Einschmelzen der Oberfläche erreicht werden.

Wenn das Werkstück rotationssymmetrisch, aber nicht zylindrisch gestaltet ist, kann die Steuerung beispielsweise auch dafür eingerichtet sein, dass der Brenner einen konstanten Abstand zur Oberfläche des Werkstücks einhält, oder es kann beispielsweise auch die Flamme des Brenners entsprechend geregelt werden.

Im Ausführungsbeispiel ist das Werkstück 10 rotationssymmetrisch ausgebildet, dies muss aber nicht unbedingt der Fall sein. Da das erfindungsgemäße Verfahren weitgehend unabhängig von der Ausrichtung der Oberfläche zur Kamera arbeitet, können mit der in Fig. 4 dargestellten Vorrichtung auch nicht-rotationssymmetrische, beispielsweise quaderförmige oder anders geformte Werkstücke bearbeitet werden. Hierfür kann auch die Einspannvorrichtung statt mit einer angetriebenen Arretierspindel mit Gegendorn anders aufgebaut sein, auch kann beispielsweise ein 3- oder mehrachsiger Antrieb vorgesehen sein, um beliebige Werkstück- und Oberflächengeometrien bearbeiten zu können.

Für den Betrieb einer erfindungsgemäßen Vorrichtung ist es vorteilhaft, wenn als Betriebsarten ein manueller Betrieb, ein Lernlauf, die Daten- und Parametereingabe, sowie ein Testlauf und der Automatikbetrieb vorgesehen sind. Die für die Durchführung des erfindungsgemäßen automatischen Verfahrens wichtigen Daten und Parameter sind beispielsweise geometrische Daten des Werkstücks, Daten über Bewegungsbahn, Start- und Endpunkt des Einschmelzvorgangs, Parameter für die Vorschubregelung sowie für die steuerbaren Funktionen des Brenners, für die Kamera und die Datenauswertung. Insbesondere für Oberflächenhelligkeit und/oder Oberflächenfarbe bzw. für signifikante Veränderungen dieser Größen können Vorgaben bestehen oder eingegeben bzw. bei einem Testlauf ermittelt werden.

### Bezugszeichenliste

- 1.: Vorrichtung
- 2.:
- 3.: Kopplung
- 4.: Gaszuleitungen
- 5.: Einwirkungsbereich
- 6.: Blickfeld
- 7.: Computer
- 8.: Abschirmung
- 9.: Thermisch gespritzte Oberfläche
- 10.: Werkstück
- 11.: Einspannvorrichtung
- 12.: Einspannschlitten
- 13.: Arretierspindel
- 14.: Einspanndorn
- 15.: Gegendorn
- 16.: Anzeigeeinrichtung
- 17.: Schiene
- 18.: Schlitten
- 19.: Haltearm
- 20.: Einschmelzbrenner
- 21.: Kamera
- 22.: Flamme

- 25.: Motor
- 26.: Antriebswelle
- 27.: Umlenkrollen
- 28.: Riemen

- 31.: Verbindungsleitung
- 32.: Signalleitungen
- 33.: Versorgungs- und Steuereinheit

## Patentansprüche

1. Verfahren zur Bestimmung eines Einschmelzgrads einer thermisch gespritzten Oberfläche, wobei zumindest ein Teilbereich der Oberfläche mit einem optischen Sensor beobachtet wird, **dadurch gekennzeichnet, dass** der optische Sensor eine Kamera ist, dass aus den von der Kamera aufgenommenen Bilddaten die Helligkeit und/oder die Farbe der Oberfläche bestimmt wird und aus einer Veränderung der Helligkeit und/oder der Farbe der Oberfläche der Einschmelzgrad ermittelt wird.

2. Verfahren nach Anspruch 1, **dadurch gekennzeichnet, dass** der Einschmelzgrad aus einer Zunahme der Helligkeit der Oberfläche ermittelt wird.

3. Verfahren nach Anspruch 1 oder 2, **dadurch gekennzeichnet, dass** der Einschmelzgrad aus einer Veränderung der relativen Helligkeiten der Oberfläche in mindestens zwei unterschiedlichen Spektralbereichen ermittelt wird.

4. Verfahren nach einem der vorhergehenden Ansprüche, **dadurch gekennzeichnet, dass** mit der Kamera zumindest ein erstes Bild des Teilbereichs der Oberfläche aufgenommen wird, nach einer hierauf folgenden Wärmeanwendung zumindest ein weiteres Bild der Oberfläche aufgenommen wird und in dem zumindest einen ersten Bild und in dem zumindest einen weiteren Bild jeweils die Helligkeit und/oder die Farbe der Werkstückoberfläche ermittelt und hieraus die Veränderung der Helligkeit und/oder der Farbe der Oberfläche bestimmt wird.

5. Verfahren nach einem der vorhergehenden Ansprüche, **dadurch gekennzeichnet, dass** kontinuierlich Bilder der Oberfläche aufgenommen und zur Ermittlung des Einschmelzgrads ausgewertet werden.

6. Vorrichtung zur Bestimmung eines Einschmelzgrads einer thermisch gespritzten Oberfläche, umfassend mindestens einen optischen Sensor zur Beobachtung zumindest eines Teilbereichs der Oberfläche sowie eine mit dem optischen Sensor verbundene Auswerteeinrichtung, **dadurch gekennzeichnet, dass** der optische Sensor eine Kamera ist und die Auswerteeinrichtung zur Ermittlung des Einschmelzgrads gemäß einem Verfahren nach einem der vorhergehenden Ansprüche ausgebildet ist.

7. Vorrichtung nach Anspruch 6, **dadurch gekennzeichnet, dass** die Kamera eine digitale Kamera ist und die Auswerteeinrichtung als digitaler Rechner ausgebildet ist.

8. Vorrichtung nach Anspruch 6 oder 7, **dadurch gekennzeichnet, dass** die Kamera eine RGB-Farbkamera ist und die Auswerteeinrichtung zur Ermittlung des Einschmelzgrads aus einer Veränderung der relativen Helligkeit der Oberfläche mindestens im G-Bild bezogen auf das R-Bild ausgebildet ist.

9. Vorrichtung nach einem der Ansprüche 6 bis 8, **dadurch gekennzeichnet, dass** die Veränderung der Helligkeit und/oder Farbe der Oberfläche durch Analyse von einem Spektralbereich von zumindest 20 nm ermittelt wird..

10. Vorrichtung nach einem der Ansprüche 6 bis 9, **dadurch gekennzeichnet, dass** eine Anzeigeeinrichtung zur Anzeige des Einschmelzgrads bzw. des Aufschmelzens der Oberfläche und/oder eine Registrierungseinrichtung zur Registrierung des ermittelten Einschmelzgrads vorgesehen ist.

11. Verfahren zum automatischen Einschmelzen einer thermisch gespritzten Oberfläche, wobei eine Wärmequelle und ein optischer Sensor automatisch gesteuert relativ zu einer einzuschmelzenden Oberfläche bewegt werden, wobei mit der Wärmequelle zumindest ein Teilbereich der Oberfläche erwärmt wird und der Teilbereich mit dem optischen Sensor beobachtet wird, **dadurch gekennzeichnet, dass** der optische Sensor eine Kamera ist und ein Einschmelzgrad der Oberfläche nach einem Verfahren gemäß einem der Ansprüche 1 bis 5 ermittelt und zur Steuerung der Bewegung von Wärmequelle und Kamera relativ zur Oberfläche und/oder der Funktion der Wärmequelle verwendet wird.

12. Vorrichtung zum automatischen Einschmelzen einer thermisch gespritzten Oberfläche eines Werkstücks, umfassend eine Halterung zum Halten eines Werkstücks mit einer einzuschmelzenden Oberfläche, mindestens eine Wärmequelle zur Erwärmung der Oberfläche, mindestens einen optischen Sensor zur Beobachtung mindestens eines Teilbereichs der Oberfläche, einen steuerbaren Bewegungsmechanismus zur Bewegung von Wärmequelle und optischem Sensor relativ zur einzuschmelzenden Oberfläche sowie eine Steuerungseinrichtung, **dadurch gekennzeichnet, dass** der optische Sensor eine Kamera ist, dass die Vorrichtung weiterhin eine Vorrichtung nach einem der Ansprüche 6 bis 10 umfasst zur Ermittlung eines Einschmelzgrads der Oberfläche und dass die Steuerungseinrichtung zur Steuerung der Bewegung von Wärmequelle und Kamera relativ zur Oberfläche und/oder der Funktion der Wärmequelle unter Verwendung des ermittelten Einschmelzgrads ausgebildet ist.

13. Vorrichtung nach Anspruch 12, **dadurch gekennzeichnet, dass** die Kamera gemeinsam mit der Wärmequelle relativ zur Werkstückoberfläche bewegbar ist.

14. Vorrichtung nach Anspruch 12 oder 13, **dadurch gekennzeichnet, dass** Kamera und Wärmequelle derart steuerbar sind, dass die Kamera stets auf einen Bereich der Werkstückoberfläche gerichtet ist, der in Bewegungsrichtung unmittelbar hinter einem Einwirkbereich der Wärmequelle angeordnet ist.

15. Vorrichtung nach einem der Ansprüche 12 bis 14, **dadurch gekennzeichnet, dass** eine Abschirmung der Kamera gegen die Strahlung der Wärmequelle vorgesehen ist.
